(19) Europäisches Patentamt
European Patent Office
Office européen des brevets

(11) EP 0 692 499 B1

(12) EUROPÄISCHE PATENTSCHRIFT

(45) Veröffentlichungstag und Bekanntmachung des Hinweises auf die Patenterteilung:
**13.05.1998 Patentblatt 1998/20**

(51) Int Cl.6: **C08F 10/00**, C08F 4/622

(21) Anmeldenummer: **95115772.6**

(22) Anmeldetag: **27.05.1992**

# (54) Polyalk-1-ene mit hohen Molmassen

Polyalkene-1 with high molecular weight

Polyalcènes-1 de haut poids moléculaire

(84) Benannte Vertragsstaaten:
**BE DE ES FR GB IT NL**

(30) Priorität: **18.06.1991 DE 4120009**

(43) Veröffentlichungstag der Anmeldung:
**17.01.1996 Patentblatt 1996/03**

(62) Dokumentnummer(n) der früheren Anmeldung(en) nach Art. 76 EPÜ:
**92108888.6 / 0 519 237**

(73) Patentinhaber: **BASF AKTIENGESELLSCHAFT**
**67056 Ludwigshafen (DE)**

(72) Erfinder:
- **Karl, Eberhard**
  **D-73434 Aalen (DE)**
- **Roell, Werner, Dr.**
  **D-78464 Konstanz (DE)**
- **Brintzinger, Hans-Herbert, Prof.Dr.**
  **CH-8274 Taegerswilen (CH)**
- **Rieger, Bernhard, Dr.**
  **D-67061 Ludwigshafen (DE)**
- **Stehling, Udo**
  **D-78467 Konstanz (DE)**

(56) Entgegenhaltungen:
**EP-A- 0 347 128** **EP-A- 0 485 822**
**EP-A- 0 485 823**

- **DIE MAKROMOLEKULARE CHEMIE: MACROMOLECULAR SYMPOSIA, Bd. 48/49, August 1991 BASEL, Seiten 333-347, XP 000233397 'Stereospecific polymerization with metallocene catalysts'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 692 499 B1

Printed by Jouve, 75001 PARIS (FR)

## Beschreibung

Die vorliegende Erfindung betrifft

Polymerisate von $C_2$- bis $C_{10}$-Alk-1-enen, erhältlich durch Polymerisation bei Drücken von 0,1 bis 3000 bar und Temperaturen von -20 bis 300°C mit Hilfe eines Katalysatorsystems bestehend aus Bis-cyclopentadienylkomplexen von Übergangsmetallen und Alumoxanverbindungen, wobei man hierzu Katalysatorsysteme enthaltend als aktive Bestandteile

a) Dimethylsilandiylbis 1-2-methylbenzindenyl)-zikoniumdichlorid

b) sowie eine offenkettige oder cyclische Alumoxanverbindung der allgemeinen Formel II bzw. III

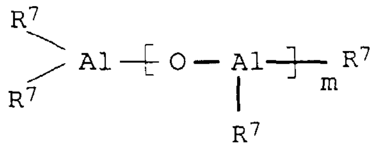 (II) 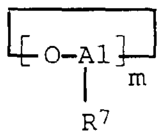 (III)

wobei $R^7$ eine $C_1$-$C_4$-Alkylgruppe bedeutet und m für eine Zahl von 5 bis 30 steht,
verwendet.

Für die Polymerisation von Alk-1-enen können neben den unlöslichen Ziegler-Natta-Katalysatoren auch lösliche Katalysatorsysteme verwendet werden. Bei letzteren handelt es sich um Komplexverbindungen von Metallen der IV. und V. Nebengruppe des Periodensystems mit organischen Liganden, die in Verbindung mit oligomeren Aluminiumverbindungen eingesetzt werden (EP-A 185 918, EP-A 283 739 und GB-A 2 207 136). Die bei diesen Katalysatorsystemen verwendeten Komplexverbindungen enthalten als organische Liganden meist Cyclopentadienylgruppen, die mit dem Übergangsmetall $\pi$-Bindungen eingehen. Häufig werden als Katalysatoren auch solche Übergangsmetallkomplexe verwendet, die neben örganischen Liganden noch an das Metallatom gebundene Halogene aufweisen.

In der EP-A 347 128 wird ein Verfahren zur Herstellung von EPC-Elastomeren in Gegenwart von Metallocenen beschrieben.

In den EP-A 284 708 und 316 155 sowie der EP-A 355 447 werden lösliche Katalysatorsysteme zur Polymerisation von Alk-1-enen beschrieben, bei denen als Komplexverbindungen Bis(cyclopentadienyl)komplexe von Metallen der IV. Nebengruppe des Periodensystems verwendet werden, wobei die beiden Cyclopentadienylringe durch ein alkylsubstituiertes Silicium-, Zinn-, oder Germaniumatom oder durch Schwefelatome verbunden sind. Dabei können auch solche Übergangsmetallkomplexe eingesetzt werden, bei denen die Cyclopentadienylringe durch Alkylgruppen substituiert sind und die als weitere Liganden zwei an das Übergangsmetall gebundene Halogene enthalten. Als oligomere Aluminiumverbindungen werden dabei vorzugsweise lineare oder cyclische Alumoxanverbindungen der allgemeinen Formel II oder III verwendet.

Mit Hilfe derartiger Katalysatorsysteme sind Polymerisate des Propylens erhältlich, die sich unter anderem durch eine relativ enge Molmassenverteilung auszeichnen. Im Gegensatz zu Polypropylen, welches durch Verwendung von unlöslichen Ziegler-Natta-Katalysatoren hergestellt wird, liegen die Molmassen der auf diese Weise erhaltenen Polypropylene bei deutlich geringeren Werten, so daß diese für zahlreiche Anwendungsgebiete, bei denen Polymerisate mit Molmassen von mehr als 100000 eingesetzt werden, nicht verwendet werden können.

Den gleichen Nachteil weisen die in der EP-A 336 128 beschriebenen Polymere auf, die mit Hilfe von Katalysatorsystemen, bestehend aus einem Alumoxan und Metallocenen, die in 2-Stellung unsubstituiert sind, hergestellt werden.

Eine Möglichkeit, die Molmassen von Polyolefinen zu erhöhen, besteht darin, während der Polymerisation die Reaktionstemperatur zu senken. Auf diese Weise sind beispielsweise bei der EP-A 355 447 Propylenpolymerisate mit Molmassen von annähernd 50000 ($\overline{M}_w$) erhältlich. Bei dieser Maßnahme ist jedoch die Erhöhung der Molmassen mit einer deutlichen Verlangsamung der Polymerisationsgeschwindigkeit, also einer deutlichen Erhöhung der Reaktionsdauer verbunden, so daß die Senkung der Reaktionstemperatur die Wirtschaftlichkeit des Herstellungsverfahrens beeinträchtigt.

Demgemäß wurden die eingangs definierten Polymerisate gefunden.

Der erfindungsgemäße Metallocenkomplex Dimethylsilandiyl-bis(-2-methylbenzindenyl)-zirkoniumdichlorid kann nach an sich bekannten Methoden hergestellt werden. Beispiele für entsprechende Herstellungsverfahren sind u.a. im Journal of Organometallic Chemistry, 369 (1989), 359-370 beschrieben.

Neben dem Metallocenkomplex enthält das Katalysatorsystem noch lineare oder cyclische Alumoxanverbindungen der allgemeinen Formel II oder III

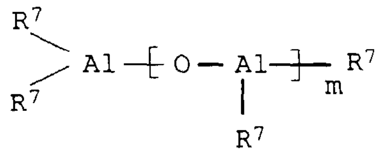 (II) 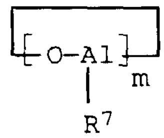 (III)

wobei $R^7$ bevorzugt für Methyl- oder Ethylgruppen und m bevorzugt für eine Zahl von 10 bis 25 steht.

Die Herstellung dieser Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen Alumoxane als Gemische unterschiedlich langer, sowohl linearer als auch cyclischer Kettenmoleküle vor, so daß m als Mittelwert anzusehen ist. Die Alumoxanverbindung kann außerdem noch Trialkylaluminiumverbindungen enthalten, deren Alkylgruppen jeweils 1 bis 8 C-Atome aufweisen, beispielsweise Trimethyl-, Triethyl- oder Methyldiethylaluminium.

Bei der Polymerisation von Alk-1-enen mit Hilfe des Katalysatorsystems ist es vorteilhaft, das Dimethylsilandiylbis (-2-methylbenzindenyl)-zirkoniumdichlorid und die Alumoxanverbindung b) in solchen Mengen zu verwenden, daß das atomare Verhältnis zwischen Aluminium aus dem Alumoxan b) und dem Übergangsmetall aus dem Metallocenkomplex im Bereich von 10:1 bis $10^6$:1, insbesondere im Bereich von 10:1 bis $10^4$:1 liegt. Dabei können die beiden Katalysatorbestandteile in beliebiger Reihenfolge einzeln oder als Gemisch in den Polymerisationsreaktor eingebracht werden. Ein besonders reaktives lösliches Katalysatorsystem ist dann erhältlich, wenn man 5 bis 60 Minuten, insbesondere 10 bis 40 Minuten vor der eigentlichen Polymerisation das Dimethylsilandiyl-bis (-2-methylbenzindenyl)-zirkoniumdichlorid und die Alumoxanverbindung b) miteinander vermischt. Der auf diese Weise aktivierte Katalysator kann anschließend sofort verwendet werden.

Mit Hilfe dieser löslichen Katalysatorsysteme lassen sich die erfindungsgemäßen Polymerisate von Alk-1-enen herstellen. Darunter werden Homo- und Copolymerisate von $C_2$- bis $C_{10}$-Alk-1-enen verstanden, wobei als Monomere vorzugsweise Ethylen, Propylen, But-1-en, Pent-1-en und Hex-1-en verwendet werden. Die Katalysatorsysteme eignen sich insbesondere zur Herstellung von Polypropylen und von Copolymerisaten des Propylens mit untergeordneten Anteilen anderer $C_2$- bis $C_{10}$-Alk-1-ene, insbesondere von Ethylen und But-1-en.

Die Herstellung dieser erfindungsgemäßen Polymerisate kann in den üblichen, für die Polymerisation von Alk-1-enen verwendeten Reaktoren entweder absatzweise oder bevorzugt kontinuierlich durchgeführt werden. Geeignete Reaktoren sind u.a. kontinuierlich betriebene Rührkessel, wobei man gegebenenfalls auch eine Reihe von mehreren hintereinander geschaltenen Rührkesseln verwenden kann.

Die Polymerisation wird bei Drücken von 0,1 bis 3000 bar und Temperaturen von -20 bis 300°C durchgeführt. Bevorzugt sind dabei Drücke von 0,5 bis 2500 bar und Temperaturen von +10 bis +150°C. Die Polymerisationsdauer liegt üblicherweise im Bereich von 0,5 bis 10 Stunden.

Polymerisationsreaktionen mit Hilfe der Katalysatorsysteme lassen sich in der Gasphase, in flüssigen Monomeren und in inerten Lösungsmitteln durchführen. Bevorzugt wird dabei die Polymerisation in Lösungsmitteln, insbesondere in flüssigen Kohlenwasserstoffen wie Benzol oder Toluol angewandt. In diesem Fall ist es vorteilhaft, wenn man pro Liter des Lösungsmittels $10^{-4}$ bis 10-1 mol Aluminium als Alumoxan verwendet.

Die mittlere Molmasse der erfindungsgemäßen Polymerisate kann mit den in der Polymerisationstechnik üblichen Methoden gesteuert werden, beispielsweise durch Zufuhr von Reglern wie Wasserstoff, oder durch Veränderung der Reaktionstemperaturen.

Die erfindungsgemäßen Polymerisate zeichnen sich durch eine hohe Molmasse und eine enge Molmassenverteilung aus. Sie können noch bei relativ hohen Temperaturen hergestellt werden, wodurch sich die Polymerisationsdauer begrenzen läßt. Aufgrund dieser Eigenschaften eignen sich die erfindungsgemäßen Polymerisate insbesondere zur Herstellung von Folien und Formkörpern.

Beispiele Herstellung von Polypropylen

Vergleichsbeispiel V1

In einem Rührautoklaven mit einem Nutzvolumen von 1 1 wurden 350 ml getrocknetes Toluol vorgelegt und anschließend mit einer Lösung von 0,45 g Methylalumoxan (durchschnittliche Kettenlänge m = 20) in 30 ml Toluol versetzt.

Dabei wurden pro Liter des Lösungsmittels 7,6 $10^{-3}$ mol Aluminium verwendet. Anschließend wurde eine Lösung von 15 mg Dimethylsilandiylbis(-2-methylindenyl)zirkoniumdichlorid (entsprechend 31,2 $10^{-6}$ mol) in 15 ml Toluol hinzugefügt, so daß das atomare Verhältnis zwischen Aluminium und Zirkonium 244:1 betrug. Diese Mischung wurde zunächst 30 Minuten lang bei 50°C gerührt und anschließend wurde Propylen bei einem Druck von 2 bar eingepreßt und 4 Stunden und 40 Minuten lang polymerisiert. Die Polymerisation erfolgte dabei bei einer Temperatur von 50°C und einem Druck von 2 bar. Danach entfernte man noch unverbrauchtes Propylen und fügte der Reaktionslösung ein Gemisch aus 1 1 Methanol und 10 ml konzentrierter Salzsäure hinzu. Das ausgefallene Polymerisat wurde abfiltriert, mit Methanol gewaschen und im Vakuum getrocknet.

Dabei erhielt man 45 g Polypropylen mit einem Gewichtsmittel ($\overline{M}_w$) von 114200, einem Zahlenmittel ($\overline{M}_n$) von 41500 und einer Molmassenverteilung ($\overline{M}_w/\overline{M}_n$) von 2,75.

Beispiel 1

Es wurde analog zum Vergleichsbeispiel V1 gearbeitet, wobei ebenfalls 350 ml getrocknetes Toluol vorgelegt und anschließend mit einer Lösung von 0,45 Methylalumoxan (m=20) in 30 ml Toluol versetzt wurden. Anschließend wurde eine Suspension von 0,5 mg Dimethylsilandiyl-bis-[3,3'-(2-methylbenzindenyl)]-zirkoniumdichlorid in 20 ml Toluol hinzugefügt, so daß das atomare Verhältnis zwischen Aluminium und Zirkonium 8950 : 1 betrug. Dann wurde wie unter V1 beschrieben weitergearbeitet.

Man erhielt 51,4 g Polypropylen mit einem Gewichtsmittelwert ($\overline{M}_w$) von 142 896, einem Zahlenmittelwert ($\overline{M}_n$) von 91917 und einer Molmassenverteilung von 1,55.

Pentadengehalt, gemessen mittels $^{13}C$-NMR: Anteil mmmm = 93,5 %.

## Patentansprüche

1. Polymerisate von $C_2$- bis $C_{10}$-Alk-1-enen, erhältlich durch Polymerisation bei Drücken von 0,1 bis 3000 bar und Temperaturen von -20 bis 300°C mit Hilfe eines Katalysatorsystems bestehend aus Bis-cyclopentadienylkomplexen von Übergangsmetallen und Alumoxanverbindungen, dadurch gekennzeichnet, daß man hierzu Katalysatorsysteme, enthaltend als aktive Bestandteile

   a) Dimethylsilandiylbis (-2-methylbenzindenyl)-zirkoniumdichlorid

   b) sowie eine offenkettige oder cyclische Alumoxanverbindung der allgemeinen Formel II bzw. III

   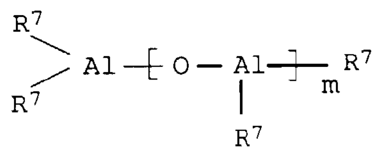 (II) 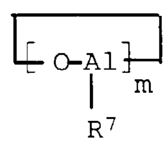 (III)

   wobei $R^7$ eine $C_1$-$C_4$-Alkylgruppe bedeutet und m für eine Zahl von 5 bis 30 steht, verwendet.

2. Polymerisate nach Anspruch 1, dadurch gekennzeichnet, daß Dimethylsilandiylbis(-2-methylbenzindenyl)-zirkoniumdichlorid und die Alumoxanverbindung b) in solchen Mengen verwendet werden, daß das atomare Verhältnis zwischen Aluminium aus dem Alumoxan b) und dem Übergangsmetall aus dem Dimethylsilandiylbis(-2-methylbenzindenyl)-zirkoniumdichlorid im Bereich von 10:1 bis $10^6$:1 liegt.

3. Polymerisate nach den Ansprüchen 1 bis 2, dadurch gekennzeichnet, daß die Katalysatorsysteme durch 5 bis 60 minütiges Vermischen des Dimethylsilandiylbis (-2-methylbenzindenyl)-zirkoniumdichlorids und der Alumoxanverbindung b) vor der Polymerisation erhältlich sind.

## Claims

1. A polymer of $C_2$-$C_{10}$-alk-1-enes, obtainable by polymerization at from -20 to 300°C and pressures of from 0.1 to 3000 bar using a catalyst system comprising biscyclopentadienyl complexes of transition metals and aluminoxane

compounds wherein the catalyst system used comprises as active constituents

a) dimethylsilanediylbis(2-methylbenzindenyl)zirconium dichloride and

b) an open-chain or cyclic aluminoxane compound of the formula II or III

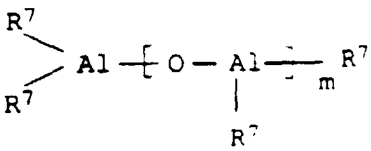 (II) 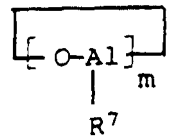 (III)

where $R^7$ is a $C_1$-$C_4$-alkyl group and m is from 5 to 30.

**2.** A polymer as claimed in claim 1, wherein dimethylsilanediylbis (2-methylbenzindenyl)zirconium dichloride and the aluminoxane compound b) are used in such amounts that the atomic ratio of aluminum from the aluminoxane b) to the transition metal from the dimethylsilanediylbis(2-methylbenzindenyl)zirconium dichloride is in the range from 10:1 to $10^6$:1.

**3.** A polymer as claimed in claim 1 or 2, wherein the catalyst system is obtainable by mixing the dimethylsilanediylbis (2-methylbenzindenyl)zirconium dichloride and the aluminoxane compound b) for from 5 to 60 minutes before the polymerization.

## Revendications

**1.** Polymères d'alc-1-ènes en $C_2$ à $C_{10}$, que l'on peut obtenir par la polymérisation, sous des pressions de 0,1 à 3000 bars et à des températures de -20 à 300°C, à l'aide d'un système catalytique qui se compose de complexes de bis-cyclopentadiényle de métaux de transition et de composés d'alumoxanne, caractérisés en ce que l'on utilise à cette fin des systèmes catalytiques qui contiennent, à titre de constituants actifs,

a) du dichlorure de diméthylsilanediylbis(-2-méthylbenzindényl)-zirconium,
b) ainsi qu'un composé d'alumoxanne à chaîne ouverte ou cyclique, de la formule générale II ou III :

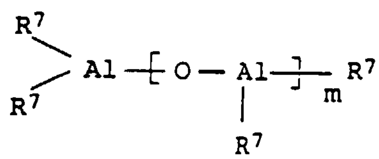

(II)

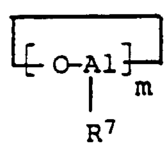

(III)

où $R^7$ représente un groupe alkyle en $C_1$ à $C_4$ et m représente un nombre de 5 à 30.

**2.** Polymères suivant la revendication 1, caractérisés en ce que l'on utilise le dichlorure de diméthylsilanediylbis(-2-méthylbenzindényl)-zirconium et le composé d'alumoxanne b) en proportions telles que le rapport atomique entre l'aluminium de l'alumoxanne b) et le métal de transition du dichlorure de diméthylsilanediylbis(-2-méthylbenzindényl)zirconium fluctue dans la plage de 10:1 à $10^6$:1.

**3.** Polymères suivant les revendications 1 et 2, caractérisés en ce que les systèmes catalytiques peuvent s'obtenir par un mélange de 5 à 60 minutes du dichlorure de diméthylsilanediylbis(-2-méthylbenzindényl)-zirconium et du composé d'alumoxanne b) avant la polymérisation.